# NEUE EUROPÄISCHE PATENTSCHRIFT

(11) **EP 1 268 119 B2**
(45) Veröffentlichungstag und Bekanntmachung des Hinweises auf die Entscheidung über den Einspruch: **18.08.2010**
(45) Hinweis auf die Patenterteilung: 06.10.2004
(21) Anmeldenummer: 01921186.1
(22) Anmeldetag: 14.03.2001
(51) Int. Cl.: B23K 35/02, B21K 1/44

(54) **VERFAHREN ZUM HERSTELLEN EINES SCHWEISSBOLZENS**
METHOD FOR PRODUCING A WELDING PIN
PROCEDE DE PRODUCTION D'UNE CHEVILLE DE SOUDAGE

(30) Priorität: 22.03.2000 DE 10014078
(43) Veröffentlichungstag der Anmeldung: 02.01.2003
(73) Patentinhaber: Nelson Bolzenschweiss-Technik GmbH & Co. KG, 58285 Gevelsberg (DE)
(72) Erfinder: SICHTERMANN, Kay, 58313 Herdecke (DE); JOST, Klaus, E., 58093 Hagen (DE)
(74) Vertreter: Eder, Christian
(86) Internationale Anmeldenummer: PCT/DE2001/000961
(87) Internationale Veröffentlichungsnummer: WO 2001/070442

(56) Entgegenhaltungen:
- EP-B- 0 243 078
- WO-A-93/22082
- DE-A- 2 532 252
- DE-A- 4 232 115
- DE-A- 4 401 881
- DE-C- 1 508 416
- DE-C- 2 344 027
- DE-U- 8 220 820
- US-A- 5 618 491
- Merkblatt DVS 0902, Lichtbogenschweissen mit Hubzündung, Juli 1988, S. 1 bis 5
- Merkblatt DVS 0902, Lichtbogenschweissen mit Hubzündung, Juli 1988, S. 1, 6 bis 7
- BILLIGMANN/FELDMANN: 'Stauchen und Pressen', Bd. 2.AUFL., 1973, CARL HANSER VERLAG MÜ. Seiten 166 - 170
- TRILLMICH, RAINER: ' Bolzenschweissen, Grundlagen und Anwendung', 1997, DEUTSCHER VERLAG FÜR SCHWEISSTECHNIK, DÜSSELDORF Seite 41, 49
- BILLIGMANN/FELDMANN: 'Stauchen und Pressen', Bd. 2. AUFL., 1973, CARL HANSER VERLAG, MÜNCHEN Seiten 273, 420 - 422
- VDI Berichte 810, Tagungsbericht der VDI-Gesellschaft Produktionstechnik (ADB): Kaltmassivumformung - Cold Forging, 8. Internationaler Kongress Nürnberg, 17. und 18. September 1990
- NOURNEY, VOLLMER GMBH & CO.: 'Fachkunde Metall', Bd. 47.AUFL., 1985, VERLAG EUROPA LEHRMITTEL, WUPPERTAL Seite 134/43

## Beschreibung

Die Erfindung bezieht sich auf ein Verfahren zum Herstellen eines Schweißbolzens aus einem Draht durch Kaltverformen und Vergüten, wobei der Schweißbolzen insbesondere zum Anschweißen an ein Werkstück mittels eines elektrischen Bolzenschweißverfahrens dient und aus einem Befestigungsabschnitt und einem Schweißabschnitt besteht.

Zum Stand der Technik zählen bereits derartige Schweißbolzen, welche nach Anschweißen an ein Werkstück zur Befestigung von Gegenständen dienen, wofür der Befestigungsabschnitt des Schweißbolzens vorgesehen ist.

Dieser Befestigungsabschnitt muss daher eine höhere Festigkeit aufweisen, als die des Schweißabschnitts.

Zum allgemein bekannten Stand der Technik sind hierbei bereits sog. Duo-Gewindebolzen bekannt, welche aus zwei verschiedenen Werkstoffen bestehen, um die vorgenannte Forderung zu erfüllen. Die Herstellung dieser Schweißbolzen ist infolge der unterschiedlichen Materialien zeit- und kostenaufwändig.

Weiterhin ist es bekannt, Schweißbolzen so herzustellen, dass das Ausgangsmaterial, beispielsweise ein Draht zunächst kaltverformt und anschließend der so gefertigte Schweißbolzen vergütet wird. Diese Vergütung ist für einige Festigkeitsklassen, z. B. Festigkeitsklasse 8.8, in Normen vorgeschrieben.

Durch die Vergütung entstehen jedoch nachteiligerweise hohe Härtespitzen in dem Schweißabschnitt. Weiterhin ist ein hoher Schweißstrom erforderlich, welcher nachteiligerweise zur Bildung von Schweißspritzern und damit zu einer ungleichmäßigen Schweißwulst führt.

Entsprechend liegt der vorliegenden Erfindung die Aufgabe zugrunde, einen Schweißholzen bzw. ein Verfahren zur Herstellung desselben zu schaffen, welches die vorgenannten Nachteile vermeidet und bei einfachem Aufbau des Schweißbolzens eine kostengünstige Herstellung ermöglicht.

Diese Aufgabe wird erfindungsgemäß gelöst durch Anspruch 1 oder 4. Hierdurch ergibt sich der Vorteil, dass die Vergütung nicht am Bolzen selbst, sondern am Ausgangsmaterial durchgeführt wird. Durch die Kombination von vergütetem Ausgangsmaterial und der anschließenden Kaltumformung wird auf einfache Weise die vorgeschriebene bzw. gewünschte Festigkeitsklasse (z. B. 8.8) erreicht.

Die Erfindung weist durch das Kaltverformen der Befestigungsabschnitt gegenüber dem Schweißabschnitt eine höhere Festigkeit auf. Hierbei wird der Draht im Bereich des Befestigungsabschnitts stärker reduziert als im Bereich des Schweißabschnitts. Vorzugsweise kann die Durchmesserreduzierung des Drahts im Bereich des Befestigungsabschnitts zwischen 40 bis 60% und im Bereich des Schweißabschnitts zwischen 15 bis 25% liegen. Als Ausgangsmaterial kann ein Draht aus vergütetem Material, beispielsweise aus Stahl (St. 37-3. 1.4301. 1.4571) Anwendung finden.

Alternativ sieht die Erfindung bei einem Schweißbolzen, zum Anschweißen an einem Werkstück mittels eines elektrischen Bolzenschweißverfahrens, mit einem Schweißabschnitt mit einem mit dem Werkstück zu verschweißenden Bolzenende und einem Befestigungsabschnitt zur Verbindung mit einem Gegenstand vor, dass die beiden aus demselben Material bestehenden Abschnitte nach einem Vorvergüten des Ausgangsmaterials durch Kaltumformung so hergestellt sind, dass die Abschnitte unterschiedliche Festigkeiten besitzen, dergestalt, dass der Befestigungsabschnitt gegenüber dem Schweißabschnitt eine höhere Festigkeit aufweist, wobei durch das Kaltverformen der Befestigungsabschnitt stärker Verformt wird als der Schweißabschnitt.

Vorteilhafte Weiterbildungen ergeben sich aus den Unteransprüchen. Die Erfindung wird nachfolgend anhand von in der Zeichnung dargestellten Ausführungsbeispielen näher beschrieben. In der Zeichnung zeigen:
- Fig. 1: Eine erste Ausführungsform eines erfindungsgemäßen Schweißbolzens vor dem Anschweißen;
- Fig. 2: den Schweißbolzen nach Fig. 1 in angeschweißtem Zustand;

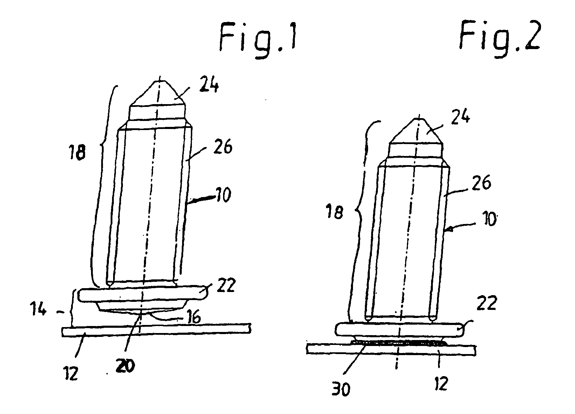

Bei der ersten Ausführungsform nach Fig. 1 und 2 findet ein Schweißbolzen 10 Anwendung, welcher aus einem Schweißabschnitt 14 und einem Befestigungsabschnitt 18 besteht. Der Schweißabschnitt 14 besitzt ein Bolzenende 16, an welchem eine Schweißspitze 20 angeformt ist. Diese Schweißspitze 20 kann beispielweise konisch ausgebildet sein.

Der Befestigungsabschnitt 18 kann beispielsweise einen Gewindebereich 26 besitzen, welcher stirnseitig in ein konisches Ende 24 übergeht.

Das Verfahren zum Herstellen eines derartigen Schweißbolzens 10 ist so, dass ein als Ausgangsmaterial vorhandener Draht zunächst vorvergütet und anschließend so kaltverformt wird, dass die in Fig. 1 dargestellte Form mit dem Schweißabschnitt 14 und dem Befestigungsabschnitt 18 entsteht, wobei durch das Kaltverformen der Befestigungsabschnitt 18 gegenüber dem Schweißabschnitt 14 eine höhere Festigkeit aufweist.

Zur Erzielung dieser höheren Festigkeit wird der Draht im Bereich des Befestigungsabschnitts 18 stärker reduziert als im Bereich des Schweißabschnitts 14. Beispielsweise kann die Durchmesserreduzierung des Drahts im Bereich des Befestigungsabschnitts 18 zwischen 40 und 60% und im Bereich des Schweißabschnitts 14 zwischen 15 und 25% liegen.

Als Ausgangsmaterial kann der Draht aus einem vergüteten Material, insbesondere aus Stahl bestehen, beispielsweise aus St. 37-3, 1.4301 oder 1.4571. Nach dem Verschweißen des Bolzens 10 mit einem Werkstück 12 ergibt sich nach Fig. 2 eine gleichmäßige Schweißwulst 13, deren Querschnitt größer ist als der Querschnitt des Befestigungsabschnitts 18. Dieser erfindungsgemäße Schweißbolzen 10 ist vorteilhafterweise so beschaffen, dass der Befestigungsabschnitt 18, d. h. das Gewinde 26 eine hohe Festigkeitsklasse (beispielsweise 8.8) erfüllt, ohne dass hierdurch der Schweißvorgang bei der Befestigung des Schweißbolzens 10 an dem Werkstück 12 negativ beeinflusst wird.

Die Ausführungsform des Schweißbolzens 10 gemäß Fig. 1 und 2 ist so, dass sich zwischen dem Schweißabschnitt 14 und dem Befestigungsabschnitt 18 ein Flansch 22 befindet.

Die erfindungsgemäßen Schweißbolzen 10 eignen sich besonders für das Kurzzeit-Bolzenschweißen mit Hubzündung und das Hubzündungs-Bolzenschweißen mit Keramikring oder Schutzgas in Anlehnung an die Norm DIN EN ISO 13918 bzw. DIN EN ISO 14555.

Durch die Erfindung ist es möglich, Schweißbolzen 10 für die angeführten Schweißverfahren mit einem Schweißabschnitt 14 herzustellen, dessen Festigkeit unterhalb der im Befestigungsbereich 18 zu garantierenden Festigkeitsklasse liegt, beispielsweise Festigkeitsklasse 8.8. Diese erfindungsgemäßen Schweißbolzen erfüllen die Anforderungen an einen vergüteten Schweißbolzen, da der Durchmesser des Schweißabschnitts 14 erheblich größer gegenüber dem Befestigungsbereich 18 dimensioniert ist; die Gesamtbelastbarkeit des Schweißbolzens 10 der vorbeschriebenen Festigkeitsklasse wird dadurch erzielt, dass der Schweißabschnitt 14, gegenüber dem Befestigungsabschnitt 18, einen höheren tragenden Querschnitt aufweist.

Der erfindungsgemäße Schweißbolzen 10 ist durchgehend aus gleichem Grundwerkstoff hergestellt. Es ergeben sich darüber hinaus folgende Vorteile:
- Verringerung von Härtespitzen im Schweißabschnitt und dadurch duktileres Verhalten;
- geringerer Schweißstrombedarf gegenüber einem durchgängig vergüteten Bolzen (z. B. Festigkeitsklasse 8.8);
- gleichmäßiger Abbrand des Schweißabschnitts bzw. der Schweißspitze (20, 20');
- gleichmäßige Schweißwulstbildung;
- geringere Neigung zur Schweißspritzbildung;
- bessere Verschweißbarkeit von Bolzen mit Oberflächenbeschichtung (z. B. Zink);
- höhere Belastbarkeit der Schweißverbindung (Schub und Torsion);
- höhere Prozesssicherheit.

Durch den Einsatz der erfindungsgemäßen Schweißbolzen 10 ist es damit möglich, die Vorteile eines vergüteten Bolzens, nämlich insbesondere hohe Festigkeit und hohes Anzugdrehmoment, mit den Vorteilen eines zäheren Schweißbolzens, nämlich besserer Verschweißbarkeit und gleichmäßiger Wulstbildung zu kombinieren.

## Patentansprüche

1. Verfahren zum Herstellen eines Schweißbolzens (10) aus einem Draht durch Kaltverformen und Vergüten, wobei der Schweißbolzen (10) zum Anschweißen an ein Werkstück (12) mittels eines elektrischen Bolzenschweißverfahrens dient und wobei der Schweißbolzen (10) aus einem Befestigungsabschnitt (18) und einem Schweißabschnitt (14) besteht,
**dadurch gekennzeichnet,**
**dass** der Draht zunächst vorvergütet und anschließend so kalt verformt wird, dass der Befestigungsabschnitt (18) und der Schweißabschnitt (14) unterschiedliche Festigkeiten aufweisen,
**dass** durch das Kaltverformen der Durchmesser des Drahts im Bereich des Befestigungsabschnitts (18) stärker reduziert wird, als der des Drahts im Bereich des Schweißabschnitts (14),
und **dass** durch das Kaltverformen der Befestigungsabschnitt (18) gegenüber dem Schweißabschnitt (14) eine höhere Festigkeit aufweist.

2. Verfahren nach Anspruch 1, **dadurch gekennzeichnet, dass** die Durchmesserreduzierung des Drahts im Bereich des Befestigungsabschnitts (18) zwischen 40 % und 60 % und im Bereich des Schweißabschnitts (14) zwischen 15 % und 25 % liegt.

3. Verfahren nach Anspruch 1 oder 2, **dadurch gekennzeichnet, dass** der Draht aus vergütetem Material besteht.

4. Schweißbolzen (10) zum Anschweißen an ein Werkstück (12) mittels eines elektrischen Bolzenschweißverfahrens, mit einem Schweißabschnitt (14) mit einem mit dem Werkstück (12) zu verschweißenden Bolzenende (16) und einem Befestigungsabschnitt (18) zur Verbindung mit einem Gegenstand,
**dadurch gekennzeichnet,**
**dass** die beiden aus demselben Material bestehenden Abschnitte (14, 18) nach einem Vorvergüten des Ausgangsmaterials durch Kaltumformung so hergestellt sind, dass die Abschnitte (14, 18) unterschiedliche Festigkeiten aufweisen,
**dass** durch das Kaltverformen der Befestigungsabschnitt (18) stärker verformt ist als der Schweißabschnitt (14), und
**dass** durch das Kaltverformen der Befestigungsabschnitt (18) gegenüber dem Schweißabschnitt (14) eine höhere Festigkeit aufweist.

5. Schweißbolzen nach Anspruch 4, **dadurch gekennzeichnet, dass** der Schweißabschnitt (14) durch einen Flansch (22) von dem Befestigungsabschnitt (18) getrennt ist.

6. Schweißbolzen nach Anspruch 4 oder 5, **dadurch gekennzeichnet, dass** der Befestigungsabschnitt (18) mit einem Gewinde (26) versehen ist.

7. Schweißbolzen nach einem der Ansprüche 4 bis 6, **dadurch gekennzeichnet, dass** der Schweißabschnitt (14) am Bolzenende (16) eine konische oder halbkugelförmige Schweißspitze (20) aufweist.

8. Schweißbolzen nach einem oder mehreren der vorhergehenden Ansprüche, **dadurch gekennzeichnet, dass** der Schweißbolzen aus vergütetem Stahl besteht.

## Claims

1. Method for producing a welding stud (10) from a wire by cold-working, and quenching and tempering, with the welding stud (10) being used for welding onto a work piece (12) by means of an electrical stud-welding process, and with the welding stud (10) consisting of a fixing section (18) and a welding section (14),
**characterised**
**in that** the wire is first pre-quenched and tempered and is subsequently cold-worked in such a way that the fixing section (18) and the welding section (14) have different strengths,
**in that** as a result of the cold-working the diameter of the wire in the region of the fixing section (18) is reduced to a greater extent than that of the wire in the region of the welding section (14),
and **in that** as a result of the cold-working the fixing section (18) has a higher strength than the welding section (14).

2. Method according to claim 1, **characterised in that** the reduction in the diameter of the wire in the region of the fixing section (18) lies between 40% and 60% and in the region of the welding section (14) lies between 15% and 25%.

3. Method according to claim 1 or 2, **characterised in that** the wire consists of quenched and tempered material.

4. Welding stud (10), for welding onto a work piece (12) by means of an electrical stud-welding process, having a welding section (14) with a stud end (16) that is to be welded together with the work piece (12) and having a fixing section (18) for connection to an object,
**characterised**
**in that** the two sections (14, 18) that consist of the same material are produced, after the starting material has been pre-quenched and tempered, by cold-forming in such a way that the sections (14, 18) have different strengths,
**in that** as a result of the cold-working the fixing section (18) is deformed to a greater extent than the welding section (14), and
**in that** as a result of the cold-working the fixing section (18) has a higher strength than the welding section (14).

5. Welding stud according to claim 4, **characterised in that** the welding section (14) is separated from the fixing section (18) by means of a flange (22).

6. Welding stud according to claim 4 or 5, **characterised in that** the fixing section (18) is provided with a thread (26).

7. Welding stud according to one of claims 4 to 6, **characterised in that** the welding section (14) at the stud end (16) has a conical or hemispherical welding tip (20).

8. Welding stud according to one or more of the preceding claims, **characterised in that** the welding stud consists of quenched and tempered steel.

## Revendications

1. Procédé de fabrication d'un goujon à souder (10) à partir d'un fil par déformation à froid et traitement, le goujon à souder (10) étant destinée à être soudé sur une pièce à usiner (12) à l'aide d'un procédé de soudure électrique de goujon fileté et le goujon à souder (10) étant constitué d'une section de fixation (18) et d'une section de soudure (14),
**caractérisé en ce que**
le fil est d'abord prétraité, puis déformé à froid de telle sorte que la section de fixation (18) et la section de soudure (14) présentent des résistances différentes,
lors de la déformation à froid, le diamètre du fil au niveau de la section de fixation (18) est réduit plus fortement que le diamètre du fil au niveau de la section de soudure (14),
et grâce à la déformation à froid, la section de fixation (18) présente une résistance plus importante par rapport à la section de soudure (14).

2. Procédé selon la revendication 1, **caractérisé en ce que** la réduction du diamètre du fil est comprise entre 40% et 60% au niveau de la section de fixation (18) et est comprise entre 15% et 25% au niveau de la section de soudure (14).

3. Procédé selon la revendication 1 ou 2, **caractérisé en ce que** le fil est constitué d'un matériau traité.

4. Goujon à souder (10) destiné à être soudé sur une pièce à usiner (12) à l'aide d'un procédé de soudure électrique de goujon, avec une section de soudure (14) comprenant une extrémité de goujon (16) à souder à la pièce à usiner (12) et une section de fixation (18) pour la liaison avec un objet,
**caractérisé en ce que**
les deux sections (14, 18) constituées du même matériau sont réalisées après un prétraitement du matériau de départ par déformation à froid, de façon à ce que les sections (14, 18) présentent des résistances différentes,
lors de la déformation à froid, la section de fixation (18) est plus fortement déformée que la section de soudure (14) et
du fait de la déformation à froid, la section de fixation (18) présente une résistance plus importante par rapport à la section de soudure (14).

5. Goujon à souder selon la revendication 4, **caractérisée en ce que** la section de soudure (14) est séparée de la section de fixation (18) par une bride (22).

6. Goujon à souder selon la revendication 4 ou 5, **caractérisée en ce que** la section de fixation (18) comporte un filetage (26).

7. Goujon à souder selon l'une des revendications 4 à 6, **caractérisée en ce que** la section de soudure (14) présente à l'extrémité du goujon (16) une pointe de soudure de forme conique ou hémisphérique (20).

8. Goujon à souder selon l'une ou plusieurs des revendications précédentes, **caractérisée en ce que** le goujon à souder est constitué en acier traité.
